# EUROPEAN PATENT SPECIFICATION

(11) **EP 4 273 528 B1**
(45) Date of publication and mention of the grant of the patent: **05.11.2025**
(21) Application number: 23170967.6
(22) Date of filing: 02.05.2023
(51) Int. Cl.: G01M 3/40

(54) **APPARATUS AND METHOD FOR DETECTING DEFECTS IN A PACKAGE**
GERÄT UND VERFAHREN ZUR ERKENNUNG VON DEFEKTEN IN EINER VERPACKUNG
APPAREIL ET PROCÉDÉ DE DÉTECTION DE DÉFAUTS DANS UN EMBALLAGE

(30) Priority: 03.05.2022 EP 22171294
(43) Date of publication of application: 08.11.2023
(73) Proprietor: Tetra Laval Holdings & Finance S.A., 1009 Pully (CH)
(72) Inventor: HALLSTADIUS, Hans, 22186 Lund (SE)
(74) Representative: Tetra Pak Patent Attorneys

(56) References cited:
- CN-A- 111 964 749
- US-A1- 2006 112 758
- US-A1- 2014 009 169

## Description

### Technical Field

The invention relates to an apparatus and method in which a ramping voltage technique is used for detecting defects in a package having an interior volume for holding a liquid food product.

### Background Art

Packages made of laminated materials (packaging laminates) are used for enclosing food products, especially liquid food such as drinks and other beverages. A typical packaging laminate includes a core layer of paper-based or some other fibrous material being covered on one side by a protective outer layer facing the outer environment of the package to be formed. The outer layer may be a polymer layer. The inside of the packaging laminate may include another protective layer which faces the product held in the package. The outer layer may be a polymer layer. The inside and/or outside layer may also be a multi-layer structure, including a first layer of polymer being in contact with the core layer, a barrier film of aluminum, and subsequent polymer layers to be in contact with the enclosed product. The packaging laminate provides a barrier that protects the food product.

To construct a suitable package for holding liquid food product, the packaging laminate material may be folded in a desired shape, with opposite edges of the package being seal bonded together to enclose the interior volume for holding the liquid food product. The seal bonding may be accomplished by using heat and pressure to melt and bond respective portions of the inner polymer layers together while providing a barrier at the bonding interface.

During the folding or sealing process, regions of the packaging laminate may become weakened or damaged. For example, regions of the outer and/or inner polymer layer may become wrinkled or thinned during package formation. Alternatively or additionally, defects such as cracks or other openings may penetrate through one or more of the layers of the multi-layer structure. This may affect barrier performance depending on the depth of the defect and the number of layers that are damaged.

Several techniques are known for testing the integrity of a laminate package. One such technique is a red-ink test in which a red ink solution is supplied to an interior volume of the package, and a visual assessment is made whether the red ink has penetrated through the inner layers and been absorbed into the paperboard core layer. A visual indication of red ink in the paperboard core layer is indicative of insufficient integrity.

Although the red ink test is simple and inexpensive, this test does not provide information about the quality of the barrier because the result is merely binary of whether the package is leaking or not. The red ink test also relies on subjective judgement by the operator to spot the ink and determine whether there is a leak.

Another technique for testing the integrity of a laminate package is disclosed in U.S. Patent No. 9,759,687. This document describes a method and device which is conducted in a dry environment by clamping a ground electrode to a conductive layer (e.g., aluminum layer) of the laminate, and uses another electrode to apply a ramping voltage to the inner polymer layer that covers the conductive layer. A defect in the packaging laminate material is detected by monitoring the voltage or current over time and registering a dielectric breakdown between the supply electrode and the conductive layer of the packaging laminate that is connected to ground.

Further prior art is described in patent documents US2006/112758A1, which discloses a method for detecting defects in a package containing metal foil by cyclic voltammetry, which comprises putting the package into an electrolytic bath, filling electrolyte into the package, positioning one electrode inside the package and positioning the other electrode in the electrolytic bath but outside of the package, then determining the current induced by applying varied voltage, thereby identifying a defect, and CN111964749A.

Although this ramping voltage test is effective for measuring a continuous response that correlates to package material integrity, there are at least two limitations with this test. The first is that the package must be carefully deconstructed to gain access to the conductive layer for attaching the ground electrode without damaging the inner polymer layer and affecting the integrity of the test. Secondly, this test can only be used for certain packaging laminates that have a conductive layer to which a mechanical attachment of the ground electrode can be made.

### Summary

It is an object of the invention to at least partly overcome one or more of the above-identified limitations of the prior art.

In particular, it is an object to provide a method for determining package integrity that is simple for an operator to use. The claimed method is defined in claim 1.

It is also an object to provide a method that can test the integrity of packages made from many different types of packaging materials.

To solve one or more of these objects, a method is provided for detecting a defect in a package that is produced from laminate materials with no conductive metal layer at all and encloses an interior volume configured to hold a liquid food product. The method comprises: putting a first body of liquid in a container; putting a second body of liquid in the package; positioning the package in the container, such that the first body of liquid in the container surrounds an outer portion of the package; providing electrical connection to the first body of liquid in the container; inserting an electrode in the second body of liquid in the package; feeding an electrical current to the electrode to increase the voltage of the electrode to at least 2 kV; measuring, with reference to the connector element, an electrical characteristic representing the increased voltage of the electrode; and determining presence of a defect in the package based on the electrical characteristic.

Advantageously, the method provides a unique way for determining package integrity that is simple for an operator to use. For example, the method provides a unique wet testing technique in which voltage of the electrode in the second body of liquid is increased over time to measure an electrical characteristic between the electrode and connector element via the first and second bodies of liquid, in which the measured electrical characteristic can be used to detect a defect in the packaging material. In this manner, unlike the prior art, the operator does not need to carefully deconstruct the package for performing the test, but instead simply needs to fill the package with the first body of liquid and place the package in the container with the second body of liquid. This may enable the testing to occur in a production environment where folding and seal bonding of the packaging laminate takes place.

The method may be used to determine the presence of a defect in the package based on whether the measured electrical characteristic indicates that a voltage over the connector element and the electrode drops before a predetermined threshold value is reached. This enables the test to be performed quickly and easily to provide an objective go/no-go result to the operator of whether a defect is present so that a determination can be made whether operations should cease.

The method also may provide a continuous or semi-continuous response to assess a quality of the package, such as leakage or insufficient thickness of the laminate or seal that would affect aseptic barrier integrity. For example, the test may provide information about the integrity of the entire test sample, including untight seals, untight openings, or closures of the package. For non-leaking packages, the test may provide information about the thinnest region of the inside insulating layer thickness, which may be used to assess the risk of insufficient thickness and corresponding leakages.

To provide additional information related to the package or manufacturing process, the voltage of the electrode may be increased to a point of package material failure where the measured electrical characteristic represents that the voltage over the connector element and the electrode drops. The method may be used with an apparatus that may include a back-end component that stores or communicates data from the testing, which may be use by the product manufacturer for detailed quality assessment, predictive failure analysis, product or process improvements, or the like.

The method also can test the integrity of packages made from many different types of packaging materials, including packages produced from laminate materials with only a thin conductive metal layer (e.g., 40 nm of Al), or no conductive metal layer at all. According to the claimed invention, the method is used for detecting a defect in a package that is produced from laminate materials with no conductive metal layer at all.

For example, the package may be formed from a multilayer packaging material that comprises a layer of fibrous material and an electrically insulating layer arranged on at least one side of the packaging material. Alternatively, the packaging material comprises a layer of fibrous material and electrically insulating layers arranged on respective sides of the layer of fibrous material. The electrically insulated layer or layers are typically layers made of a polymer material, as conventionally used within the packaging industry. The layer of fibrous material may have an edge section that is exposed to the first body of liquid in the container such that the liquid is soaked into the layer of fibrous material at the edge. When the multilayer material has no metal layer at all, then the soaked fibrous material layer becomes an electrically conductive layer that electrically connects the electrode to the connector element across the two bodies of liquid when the electrically insulating layer breaks down. In contrast, the dry ramping voltage method disclosed in the prior art is not practically capable of testing a package material devoid of a conductive metal layer.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of an exemplary apparatus according to an embodiment of the invention, which is shown with a door opened for loading package test samples.
Fig. 2 is a perspective view of the apparatus shown with the door closed.
Fig. 3 is a schematic view of the apparatus including exemplary control and measurement circuitry.
Fig. 4 is a schematic view of an alternative embodiment of the apparatus including exemplary control and measurement circuitry.
Fig. 5 is an exemplary measurement graph showing voltage over time during a test using the apparatus.
Fig. 6 is a flow chart showing an exemplary method according to an embodiment of the invention.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

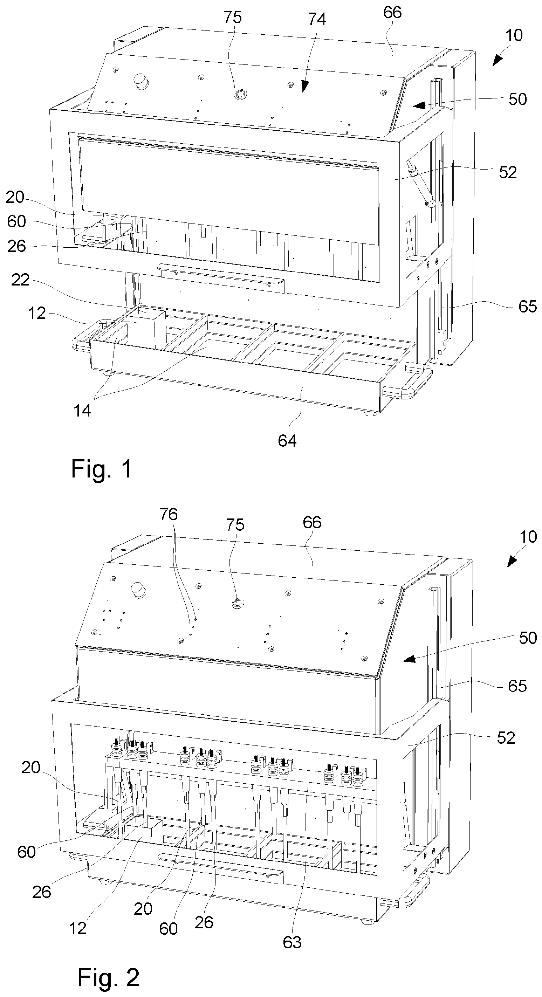

With reference to Figs. 1-3, an exemplary testing apparatus 10 for detecting a defect in a package 12 configured to hold a liquid food product is illustrated. As shown, the testing apparatus 10 includes a container 14 arranged to hold a first body of liquid 16 and to receive the package 12 for positioning the package in the container 14 with the first body of liquid 16 surrounding an outer portion 18 of the package 12. A connector element 20 is arranged to provide electrical connection to the first body of liquid 16 in the container 14. The package 12 encloses an interior volume 22 and contains a second body of liquid 24. An electrode 26 is arranged to be inserted into the second body of liquid 24 contained in the interior volume 22 of the package. A power source 28 is connected to the electrode 26 and is configured to feed an electrical current 29 to the electrode 26. A control unit 30 is connected to the power source 28 and is configured to control the power source 28 to increase the voltage of the electrode 26 inserted in the second body of liquid 24. The control unit 30 measures, with reference to the connector element 20, an electrical characteristic representing the increased voltage of the electrode 26. In practice, this may mean that, for example, the voltage U over the connector element 20 and the electrode 26 is measured. Based on the measured electrical characteristic, the control unit 30 is configured to determine whether a defect in the package 12 is present.

For example, the package 12 may be formed from a multilayer packaging material 32 that includes a fibrous material layer 34, an inner electrically insulating layer 36 on one side of the fibrous material layer 34, and an outer electrically insulating layer 38 arranged on an opposite side of the fibrous material layer 34, typically on the outer side of the package 12. The fibrous material layer 34 may include paperboard and may be absorbent to liquid. The outer and inner electrically insulating layers 36, 38 may be made from a dielectric polymer material, such as a thermoplastic, for example polyethylene. A thickness of the insulating layers 36, 38 may be about 25 micrometers and provide a first barrier. As shown, and outside the scope of the claims, the packaging material 32 also may include a metal barrier layer 42, such as a conductive metal, for example aluminum, which provides an additional barrier. The package 12 may be made with a more sustainable and biodegradable packaging material 32 that is devoid of metal, or, also outside the scope of the claims, which has a very thin metal layer 42 on the order of nanometers in thickness.

To provide a desired shape of the package 12, the packaging material 32 may be folded and edge sections 44 of the packaging material 32 may be bonded together at an interface 46 to sealingly enclose the interior volume 22 and provide a barrier at the interface 46. The seal bonding may be accomplished by using heat and pressure to melt and bond respective portions of the inner insulating layer 36 together. As shown, the packaging material 32 may be folded and seal bonded in such a way that a terminal edge 48 of the packaging material 32 exposes the fibrous material layer 34 to an external environment (e.g., the body of liquid 16). The conductive metal layer 42, if any, also may be exposed to the external environment at the terminal edge 48.

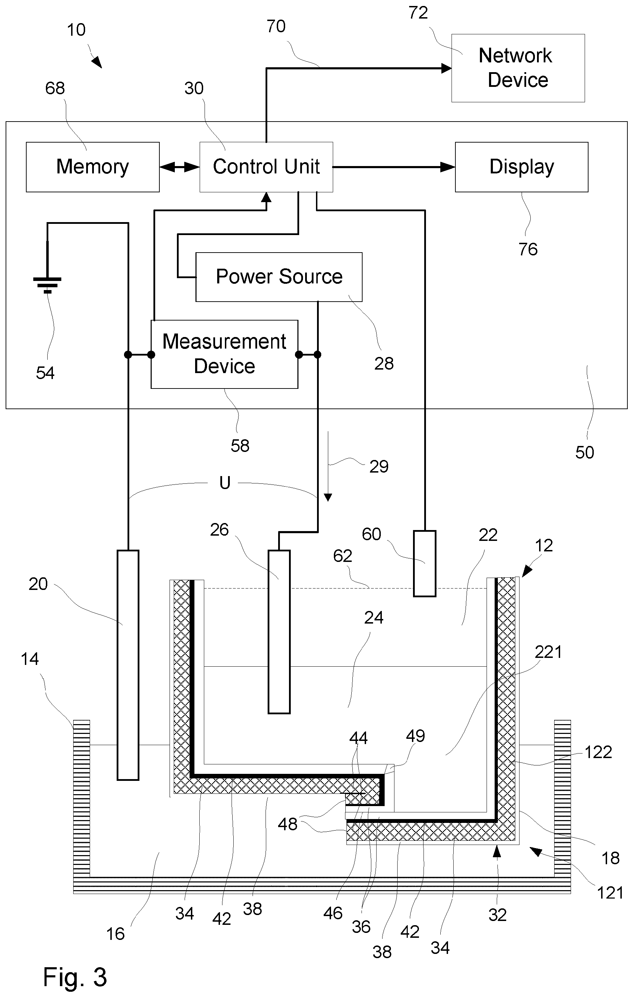

The folding or sealing process of the package 12 may cause defects in the packaging material 32. Other processes or handling of the package 12 during manufacturing also may cause defects in the packaging material 32. Such defects may include, for example, thinning of the inner insulating layer 36, cracks or openings that propagate at least through the inner insulating layer 36 and possibly through one or more other layers to the fibrous material layer 34, or other such defects that reduce the aseptic integrity of the package 12. In the schematic illustration of Fig. 3, the defect is represented at a folded corner region 49 of the inner insulating layer 36.

As noted above and described in further detail below, the exemplary testing apparatus 10 is configured to provide a unique wet testing technique in which voltage of the electrode 26 inserted in the second body of liquid 24 is increased over time to measure an electrical characteristic between the electrode 26 and the connector element 20 via the first and second bodies of liquid 16, 24, in which the measured electrical characteristic can be used to detect a defect in the packaging material 32. Such an apparatus provides a method for testing package integrity that is simple for an operator to use, and which also can test the integrity of packages made from many different types of packaging materials, among other considerations.

To provide a suitable testing environment, the apparatus 10 may include a housing 50 having an opening for inserting or removing the package(s) 12 to be tested from a test compartment. The opening of the housing 50 may be opened or closed by a lid or door 52 for permitting access during insertion or removal of the package test samples, or for restricting access during a test sequence. With the door 52 closed, the housing 50 encloses test instruments that may have a high voltage during testing, including at least the container 14, the connector element 20, the electrode 26, and the package 12 being tested. As shown, more than one set of test instruments may be provided in the apparatus 10, such as two, three, four or more. As described in further detail below, because package testing may be done by cutting the package in half and testing each half, the sets of test instruments including the container 14, electrode 26, and connector element 20 may be provided in pairs.

Generally, when using the apparatus 10 for testing the integrity of the package 12 either the lower part (half) the package is tested or its upper part (half). These are the parts of the package that are most susceptible to defects as this is where the folded parts of the package are located. Of course, the method described herein could also be performed for packages that are intact, for example by pushing the electrode 26 through the package 12 and into liquid within the package. In this case parts of the electrode that may be in contact with the package material at the electrode entry point can be electrically insulated, while the lower part of the electrode is formed as an electrically conducting tip which is in contact with the liquid contained in the package.

The container 14 may be any suitable vessel for containing a sufficient volume of the first body of liquid 16 for surrounding an outer portion of the package 12 when the package 12 is placed therein. In the illustration, the container 14 is configured as a relatively shallow tray. The container 14 may be fixed in the housing 50 or may be removable from the housing 50. The container 14 being removable may be advantageous to facilitate filling with the first body of liquid 16. The first body of liquid 16 in the container 14 may be any suitable electrically conductive liquid, such as an NaCl water solution (saltwater). The second body of liquid 24 that is poured in the package 12 also may be any suitable electrically conductive liquid, such as an NaCl water solution.

The connector element 20 may be any suitable structure that electrically connects the first body of liquid 16 in the container 14. In the illustration, the connector element 20 is an electrode inserted in the first body of liquid 16 and electrically connected to ground 54. Alternatively, for example, the connector element 20 may be an electrical contact portion of the container 14 itself which may be connected to ground 54.

The electrode 26 is operatively coupled to the power source 28 for receiving current 29 such that the voltage of the electrode 26 in the second body of liquid 24 may be increased. The power source 28 may be configured to supply direct current (DC) to the electrode 26. This current and voltage is transmitted to through the second body of liquid 24 to the inner insulating layer 36. The increase in voltage of the electrode 26 over time is controlled by the control unit 30 and may be based on the particular type of packaging material 32 or the information desired to be obtained from the test. In exemplary embodiments, the power supply 28 and electrode 26 are configured to supply a sufficient voltage to cause a defect due to dielectric breakdown, such as a crack or hole, in the inner insulating layer 36.

A measurement device 58 may be operatively coupled to the electrical circuit between the electrode 26 and connector element 20 for measuring the desired electrical characteristic. In Fig. 3, the measurement device 58 is a voltmeter connected in parallel across respective electrical lines of the electrode 26 and connector element 20 for measuring voltage U as the electrical characteristic.

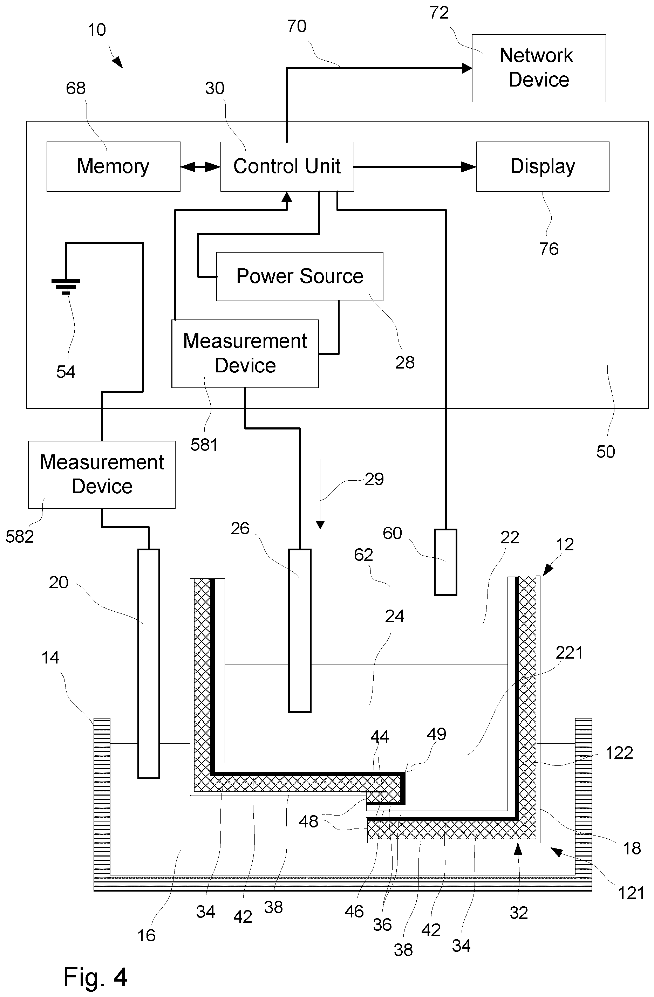

Fig. 4 shows an alternative embodiment in which the measurement device has the form of two ammeters with one ammeter 581 connected in series in the electrical line between the electrode 26 and power source 28 and with another ammeter 582 connected in series in the electrical line between the connector element 20 and ground 54. The first ammeter 581 can then be used for measuring how much current is supplied to the electrode 26 and the second ammeter 582 can be used for detecting dielectric breakdown. In this case the measured electrical characteristic, i.e. electrical currents, represent the increased voltage of the electrode since the voltage depends on the current. Other setups are possible for measuring an electrical characteristic that represent the increased voltage of the electrode 26.

The measurement device 58 is shown operatively coupled to the control unit 30 for sending information associated with the measured electrical characteristic. Alternatively, the measurement device 58 may be included in the control unit 30. Other types of measurement devices 58 for measuring different types of electrical characteristics, such as impedance for example, also could be utilized.

As shown, the apparatus 10 may include a second connector element 60, such as an electrode, that is arranged to be inserted into the interior volume 22 of the package 12 simultaneously with the electrode 26, in which the second connector element 60 is arranged at a higher elevation than the electrode 26. In this manner, if the second body of liquid 16 contained in the package 12 fills the interior volume above a predetermined level 62 inside the package 12, then the second connector element 60 becomes inserted into the second body of liquid 16 after the electrode 26. The control unit 30 may be configured to measure a second electrical characteristic representing presence of an electrical current flowing from the electrode 26 to the second connector element 60. If the control unit 30 detects, for example by using an ammeter, an electrical current flowing from the electrode 26 to the second connector element 60, then a signal may be generated indicating this state. In such a situation, the signal may be a control signal that terminates the test. Such features may be advantageous to prevent a significant volume of the second body of liquid 16 from being tested which could otherwise accumulate a significant electrical charge.

The control unit 30 (also referred to as an electronic controller) may include all apparatus, devices, and machines for processing data, including electronic control circuitry that is configured to carry out various control operations relating to control of the apparatus 10. The control circuitry may be special or general purpose circuitry. The control unit 30 may include, by way of example a programmable processor, a computer, or multiple processors or computers. For example, the primary control circuit may include an electronic processor, such as a CPU, microcontroller or microprocessor. The operative connection(s) of the control unit 30 to the various components includes those in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. The control unit 30 may include, in addition to hardware, code that creates an execution environment for the computer program in question. The computer program (also referred to as software or code), may be deployed in any form, including as a stand-alone program or as a module, component, subroutine, or other unit suitable for use in a computing environment. Generally, the control unit 30 will receive instructions and data from a read-only memory or a random-access memory or both. The control unit 30 may be operatively coupled to receive data from or transfer data to, or both, one or more mass storage devices for storing data. Devices suitable for storing computer program instructions and data include all forms of non-volatile memory, media and memory devices, including by way of example semiconductor memory devices. The computer program and data also may be deployed to be executed on one computer or on multiple computers that are located at one site or distributed across multiple sites and interconnected by a communication network.

In exemplary embodiments, one or more of the electrode 26, the connector element 20 (e.g., second electrode), and the second connector element 60 (e.g., third electrode) is/are operatively coupled to and movable with the door 52 so as to moved downwardly relative to the container 14 when the door 52 is closed, and move upwardly relative to the container 14 when the door 52 is opened. This facilitates insertion or removal of the sample test package 12 when the door 52 is opened by moving the electrode 26 and/or connector element(s) 20, 60 up and out of the way when the door 52 is opened, and arranges the electrode 26 and/or connector element(s) 20, 60 at the appropriate positions such as in or relative to the respective bodies of liquid 16, 24 during the test sequence. The operative connection between the electrode 26 and/or connector element(s) 20, 60 may be provided by a suitable actuator, such as a hydraulic piston-cylinder assembly, by a carriage 63, or the like. As shown in Figs. 1 and 2, the door 52 is guided by vertical rails 65 such that the electrode 26 and/or connector element(s) 20, 60 are moved vertically in a similar fashion. Alternatively to moving the electrode 26 and/or connector elements 20, 60, one or more platforms 64 holding the container(s) 14 may be actuated to move in response to opening or closing the door 52.

The housing 50 may include an electrical cabinet 66 or other suitable enclosure for containing the electrical circuitry including, for example, the control unit 30, the power source 28, the measurement device 58, or the like. As shown, for example, the control unit 30 may be operatively coupled to memory 68 for storing or retrieving data or reading or writing instructions for the test sequence. The control unit 30 also may have a communications link 70 that operatively couples the control unit 30 to a network device 72, such as an electronic server or another computer, for sending or retrieving data.

A control panel 74 may be provided with a user interface, which may include a start button 75 for starting the test. The control panel 74 also may include a display, which may include display panel or which may include one or more lights 76 for indicating to the user the test result (e.g., pass, fail, or otherwise). As an example, a red light may indicate to stop operations (e.g., seal bonding) because a defect is detected and there is an issue with package integrity whereby corrective actions are needed. A green light may indicate that production can continue. A yellow light may indicate that the package integrity is still acceptable but under less robust conditions, and if the yellow indicators are frequent, corrective actions may be required at the next possible occasion.

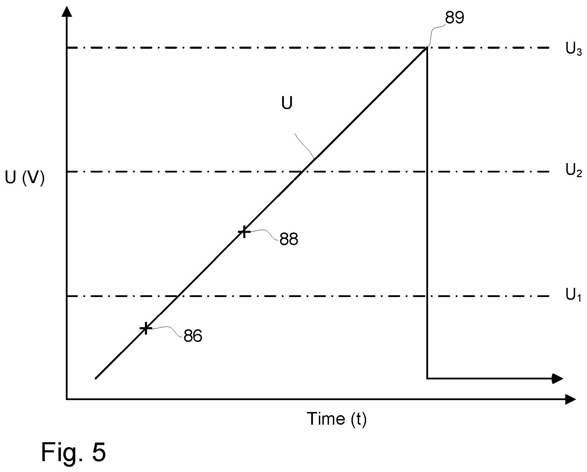

Turning to Fig. 5, a graph showing an exemplary measurement sequence of increasing voltage U (V) over time (t) is shown. As noted above, the exemplary testing apparatus 10 is configured such that the control unit 30 controls the power source 28 to increase the voltage U of the electrode 26 inserted in the second body of liquid 24, and the control unit 30 measures, with reference to the connector element 20, an electrical characteristic representing the increased voltage of the electrode 26. Based on the measured electrical characteristic, the control unit 30 determines whether a defect in the package is present. In Fig. 5, the measured electrical characteristic is the ramping increase in voltage U over time (t); however, current (I) or other electrical characteristics also could be measured.

In exemplary embodiments, the integrity of the packaging material 32 is determined by measuring the voltage or current over time and registering a dielectric breakdown (e.g., breakdown voltage U_{P}) of the packaging material 32 relative to known threshold values, shown at U₁ and U₂ in Fig. 5. For example, because the inner dielectric insulating layer 36 is electrically interposed between the electrode 26 in the electrified first body of liquid 16 and the connector element 20 in the electrically conductive second body of liquid 24, a defect may be detected based on monitoring and registering the dielectric breakdown of the inner insulating layer 36. When such a dielectric breakdown occurs, it is indicative that a portion of the inner insulating layer 36 has become electrically conductive and thus electrically connects the electrode 26 and connector element 20 via the respective bodies of liquid 16, 24.

Because the breakdown voltage U₃ (peak voltage) is proportional to the inner layer 36 thickness at its thinnest position, and also the dielectric strength of the inner layer material (e.g., polymer), such a test method may be used to determine the aseptic integrity of the package relative to the threshold values U₁, U₂. For example, a dielectric breakdown (e.g., voltage drop) occurring at point 86, which is below the lower threshold value U₁, may indicate that a defect is present, such a crack penetrating through the inner insulating layer 36, or portion of the inner insulating layer 36 that is too thin and potentially has ruptured during the test. This would result in a red indicator light on the display panel 76 as described above. As another example, a dielectric breakdown occurring at point 88, which is above the lower threshold value U₁ and below the upper threshold value U₂, may indicate the package integrity is still acceptable but under less robust conditions, which would result in a yellow indicator 76 as described above. As a further example, a dielectric breakdown occurring above the upper threshold value U₂, e.g. at the dialectical breakdown point 89 when the voltage reaches the breakdown voltage U₃ shown in Fig. 5, would be indicative of acceptable package integrity and thus a green indicator light.

It is noted that because voltage breakdown is dependent on dielectric strength (units kV/mm), which itself depends on the material structure and test conditions, the threshold values U₁, U₂ may be determined experimentally with constant test conditions which can be programmed into the control unit 30 along with the experimentally determined threshold values U₁, U₂ for the particular type(s) of package(s) 12 to be tested. As an example, the relation between breakdown voltage and thickness for low-density polyethylene (LDPE) may be about 1 kV ~ 2 µm. Thus, with a nominal layer thickness of about 20 µm, the breakdown voltage may be about 10 kV, or greater in more robust package samples. The voltage may be ramped at a rate of 30 to 60 kV/s, and thus the test of a package with a 20 µm LDPE inner insulating layer can be finished in less than a second. As such, the exemplary apparatus 10 is not only simple to use for the operator, it also is a very fast and effective test for determining package integrity. The control unit 30 may, for example, be programmed to apply a linear voltage ramping from 0 to 8 kV for 2 seconds. The maximum current of the voltage generator may be set to approximately 0.02 mA.

Suitable threshold values, voltage ramp-up rates, currents, test durations etc. may be empirically determined based on the type of package for which a defect shall be detected and on what type of packaging laminate material the package is made of.

In some embodiments, the control unit 30 may be configured to ramp voltage U until it meets or exceeds the upper threshold value U₂ for a period of time and then stop the test, since this is indicative of an acceptable package. In other embodiments, as shown in Fig. 5, the control unit 30 may be configured to increase the voltage of the electrode 26 until the material breaks at its weakest location, which often coincides with its thinnest location. This breaking value is shown at U₃ in Fig. 5 at which point 89 the measured voltage U reaches the voltage breakdown U₃. This information may be stored in the memory 68 for download, or may be communicated to the network device 72, and which may be useful to the product manufacturer for detailed quality assessment, predictive failure analysis, product or process improvements, or the like.

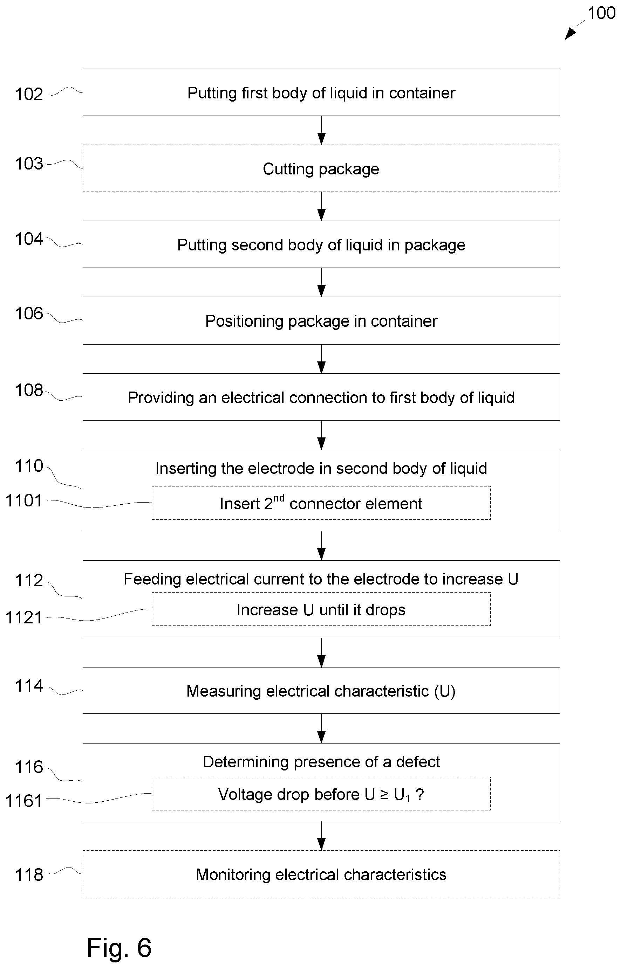

Turning to Fig. 6, a flow chart of an exemplary method 100 for detecting a defect in a package configured to hold a liquid food product is shown. At least some of the steps in method 100 may be performed by the control unit 30 via suitable control logic. The method 100 may begin at step 102 with putting the first body of liquid 16 in the container 114, which may be a saltwater solution. Step 104 includes putting the second body of liquid 24 in the package 12, which also may be a saltwater solution. This step 104 may be preceded by cutting 103 the package 12 open while keeping at least a bottom section 121 of the package 12 intact with at least a part of a wall 122 of the package 12 extending from the bottom section 121, such that a lower part 221 of the interior volume 22 of the package 12 remains intact.

Step 106 includes positioning the package 12 in the container 14, such that the first body of liquid 16 in the container 14 surrounds the outer portion of the package 12. This step 106 may include positioning the bottom section 121 of the package 12 into the container 14, such that the liquid 16 in the container 14 wets the bottom section and at least a part of the wall of the package 12 extending from the bottom section 121. Following the positioning in step 106, the method 100 may further include allowing the liquid 16 in the container 14 to wet the edge section 44 of the multilayer packaging material 32, such that the liquid 14 is soaked into the fibrous material layer 34 at the edge section 44. Outside the scope of the claims, the multilayer packaging material 32 also may include metal layer 42, and the method 100 may include allowing the liquid 16 in the container 14 to wet the edge section 44 for providing electrical connection between the metal layer 42 and the liquid 16 in the container 14.

Step 108 includes providing the electrical connection 20 to the first body of liquid 16 in the container 14. Step 110 includes inserting the electrode 26 in the second body of liquid 24 in the package 12. Step 112 includes feeding electrical current to the electrode 26 to increase the voltage of the electrode 26. Step 114 includes measuring, with reference to the connector element 20, an electrical characteristic (e.g., U) representing the increased voltage of the electrode 26. Step 116 includes determining presence of a defect in the package 12 based on the measured electrical characteristic.

The determining 116 of presence of the defect 49 may comprise determining 1161 whether the electrical characteristic U indicates that a voltage over the connector element 20 and the electrode 26 drops before the predetermined threshold value U₁ is reached. The feeding 112 of the electrical current 29 may comprise increasing 1121 the voltage of the electrode 26 until the electrical characteristic U indicates that a voltage over the connector element 20 and the electrode 26 drops.

For safety reasons, the method may comprise inserting 1101, simultaneously with the inserting 110 of the electrode 26 in the second body of liquid 24, the second connector element 60 into the interior volume 22 of the package 12. The second connector 60 is arranged at a higher elevation than the electrode 26, such that, if the second body of liquid 24 contained in the interior volume 22 of the package 12 fills the interior volume 22 above the predetermined level 62, the second connector element 60 becomes inserted into the second body of liquid 24 in the package 12 after the electrode 26. The method involves measuring a second electrical characteristic representing presence of an electrical current 29 flowing from the electrode 26 to the second connector element 60, and generating, if an electrical current 29 flowing from the electrode 26 to the second connector element 60 is present, a signal indicative of such presence.

The method 100 may be performed for a number of packages 12 produced by the same packaging machine at different points in time, to thereby obtain the electrical characteristic for each package 12 of the number of packages that such a sequence of electrical characteristics is formed. The sequence of electrical characteristics may be monitored 118 for determining if the electrical characteristic has changed over time. Based on this, the method 100 may perform at least one of the steps of: (i) initiating a maintenance activity for the packaging machine if the change exceeds a predetermined threshold, and correlating the change with a measure that has been taken for the packaging machine.

The control unit 30 is configured to control the power source 28 to increase the voltage of the electrode 26 to at least 2 kV. Alternatively, the control unit 30 is configured to control the power source 28 to increase the voltage of the electrode 26 to at least 5 kV, to at least 8 kV, or to at least 10 kV. Herein "kV" means kilovolt, i.e. one thousand volt. The upper limit for the voltage of the electrode 26 may be 35 kV, or even higher.

The method 100 comprises feeding 112 the electrical current 29 to the electrode 26 to increase the voltage of the electrode 26 to at least 2 kV, to at least 5 kV, to at least 8 kV, or to at least 10 kV.

From the description above follows that, although various embodiments of the invention have been described and shown, the invention is not restricted thereto, but may also be embodied in other ways within the scope of the subject-matter defined in the following claims.

## Claims

1. A method (100) for detecting a defect (49) in a package (12) that is produced from laminate materials with no conductive metal layer and encloses an interior volume (22) configured to hold a liquid food product, the method (100) comprising
putting (102) a first body of liquid (16) in a container (14),
putting (104) a second body of liquid (24) in the package (12),
positioning (106) the package (12) in the container (14), such that the first body of liquid (16) in the container (14) surrounds an outer portion (18) of the package (12),
providing (108) electrical connection to the first body of liquid (16) in the container (14),
inserting (110) an electrode (26) in the second body of liquid (24) in the package (12),
feeding (112) an electrical current (29) to the electrode (26) to increase the voltage of the electrode (26) to at least 2 kV,
measuring (114), with reference to the connector element (20), an electrical characteristic (U) representing the increased voltage of the electrode (26), and
determining (116) presence of the defect (49) in the package (12) based on the electrical characteristic (U).

2. The method (100) according to claim 1, wherein the determining (116) of presence of the defect (49) comprises determining (1161) whether the electrical characteristic (U) indicates that a voltage over the connector element (20) and the electrode (26) drops before a predetermined threshold value (U₁) is reached.

3. The method (100) according to claim 1 or 2, wherein the feeding (112) of the electrical current (29) comprises increasing (1121) the voltage of the electrode (26) until the electrical characteristic (U) indicates that a voltage over the connector element (20) and the electrode (26) drops.

4. The method (100) according to any one of claims 1 to 3, comprising inserting (1101), simultaneously with the inserting (110) of the electrode (26) in the second body of liquid (24), a second connector element (60) into the interior volume (22) of the package (12), while having the second connector (60) arranged at a higher elevation than the electrode (26), such that, if the second body of liquid (24) contained in the interior volume (22) of the package (12) fills the interior volume (22) above a predetermined level (62) inside the package (12), the second connector element (60) becomes inserted into the second body of liquid (24) in the package (12) after the electrode (26),
measuring a second electrical characteristic representing presence of an electrical current (29) flowing from the electrode (26) to the second connector element (60), and
generating, if an electrical current (29) flowing from the electrode (26) to the second connector element (60) is present, a signal indicative of such presence.

5. The method (100) according to any one of claims 1 to 4, comprising
cutting (103) the package (12) open while keeping a bottom section (121) of the package (12) intact with at least a part of a wall (122) of the package (12) extending from the bottom section, such that a lower part (221) of the interior volume (22) of the package (12) remains intact,
wherein the positioning (106) of the package (12) in the container (14) comprises positioning the bottom section (121) of the package (12) into the container (14), such that the first body of liquid (16) in the container (14) wets the bottom section (121) and at least a part of the wall (122) of the package (12) extending from the bottom section (121).

6. The method (100) according to any one of claims 1 to 5, wherein the package (12) is formed from a multilayer packaging material (32) that comprises a layer of fibrous material (34) and at least one electrically insulating layer (36) arranged on a side of the layer of fibrous material (34), the multilayer packaging material (32) having an edge section (44) where the layer of fibrous material (34) is exposed to the surrounding atmosphere, the method (100) comprising
allowing the first body of liquid (16) in the container (14) to wet the edge section (44) of the multilayer packaging material (32), such that a part of the first body of liquid (16) soaks into the layer of fibrous material (34) from the edge section (44).

7. The method (100) according to any one of claims 4-6, wherein the first body of liquid (16) and the second body of liquid (24) are electrically conductive liquids, in particular, an NaCl-water solution.

8. The method (100) according to any one of claims 1 to 6, comprising
performing the method (100) for a number of packages (12) produced by the same packaging machine at different points in time, to thereby obtain the electrical characteristic (U) for each package (12) of the number of packages, such that a sequence of electrical characteristics (U) is formed,
monitoring (118) the sequence of electrical characteristics (U) for determining if the electrical characteristics (U) have changed over time, and performing at least one of the steps of
- initiating a maintenance activity for the packaging machine if the change exceeds a predetermined threshold, and
- correlating the change with a measure that has been taken for the packaging machine.

## Patentansprüche

1. Verfahren (100) zum Detektieren eines Defekts (49) in einer Verpackung (12), das aus Laminatmaterialien ohne leitfähige Metallschicht hergestellt ist und ein Innenvolumen (22) umschließt, das zum Halten eines flüssigen Lebensmittelprodukts ausgelegt ist, wobei das Verfahren (100) Folgendes umfasst:
Einsetzen (102) eines ersten Flüssigkeitskörpers (16) in einen Behälter (14),
Einsetzen (104) eines zweiten Flüssigkeitskörpers (24) in die Verpackung (12),
Positionieren (106) der Verpackung (12) in dem Behälter (14), so dass der erste Flüssigkeitskörper (16) in dem Behälter (14) einen äußeren Teil (18) der Verpackung (12) umgibt,
Bereitstellen (108) einer elektrischen Verbindung mit dem ersten Flüssigkeitskörper (16) in dem Behälter (14),
Einsetzen (110) einer Elektrode (26) in den zweiten Flüssigkeitskörper (24) in der Verpackung (12),
Zuführen (112) eines elektrischen Stroms (29) zu der Elektrode (26), um die Spannung der Elektrode (26) auf mindestens 2 kV zu erhöhen,
Messen (114), mit Bezug auf das Verbinderelement (20), einer elektrischen Charakteristik (U), die die erhöhte Spannung der Elektrode (26) repräsentiert, und
Bestimmen (116) des Vorhandenseins des Defekts (49) in der Verpackung (12) basierend auf der elektrischen Charakteristik (U).

2. Verfahren (100) nach Anspruch 1, wobei das Bestimmen (116) des Vorhandenseins des Defekts (49) Bestimmen (1161) umfasst, ob die elektrische Charakteristik (U) angibt, dass eine Spannung über dem Verbinderelement (20) und der Elektrode (26) abfällt, bevor ein vorbestimmter Schwellenwert (U₁) erreicht wird.

3. Verfahren (100) nach Anspruch 1 oder 2, wobei das Zuführen (112) des elektrischen Stroms (29) Erhöhen (1121) der Spannung der Elektrode (26) umfasst, bis die elektrische Charakteristik (U) angibt, dass eine Spannung über dem Verbinderelement (20) und der Elektrode (26) abfällt.

4. Verfahren (100) nach einem der Ansprüche 1 bis 3, das Folgendes umfasst:
Einsetzen (1101), zeitgleich mit dem Einsetzen (110) der Elektrode (26) in den zweiten Flüssigkeitskörper (24), eines zweiten Verbinderelements (60) in das Innenvolumen (22) der Verpackung (12), während der zweite Verbinder (60) auf einer höheren Höhe als die Elektrode (26) angeordnet ist, sodass, wenn der zweite Flüssigkeitskörper (24), der in dem Innenvolumen (22) der Verpackung (12) enthalten ist, das Innenvolumen (22) über einem vorbestimmten Füllstand (62) im Inneren der Verpackung (12) füllt, das zweite Verbinderelement (60) nach der Elektrode (26) in den zweiten Flüssigkeitskörper (24) in der Verpackung (12) eingesetzt wird,
Messen einer zweiten elektrischen Charakteristik, die das Vorhandensein eines elektrischen Stroms (29) repräsentiert, der von der Elektrode (26) zu dem zweiten Verbinderelement (60) fließt, und
Erzeugen, falls ein elektrischer Strom (29), der von der Elektrode (26) zu dem zweiten Verbinderelement (60) fließt, vorhanden ist, eines Signals, das indikativ für eine solche Anwesenheit ist.

5. Verfahren (100) nach einem der Ansprüche 1 bis 4, das Folgendes umfasst:
Aufschneiden (103) der Verpackung (12), während ein Bodenabschnitt (121) der Verpackung (12) intakt gehalten wird, wobei sich mindestens ein Teil einer Wand (122) der Verpackung (12) von dem Bodenabschnitt erstreckt, sodass ein unterer Teil (221) des Innenvolumens (22) der Verpackung (12) intakt bleibt,
wobei das Positionieren (106) der Verpackung (12) in dem Behälter (14) das Positionieren des Bodenabschnitts (121) der Verpackung (12) in dem Behälter (14) umfasst, sodass der erste Flüssigkeitskörper (16) in dem Behälter (14) den Bodenabschnitt (121) benetzt und sich mindestens ein Teil der Wand (122) der Verpackung (12) von dem Bodenabschnitt (121) erstreckt.

6. Verfahren (100) nach einem der Ansprüche 1 bis 5, wobei die Verpackung (12) aus einem mehrschichtigen Verpackungsmaterial (32) gebildet ist, das eine Schicht aus Fasermaterial (34) und mindestens eine elektrisch isolierende Schicht (36) umfasst, die auf einer Seite der Schicht aus Fasermaterial (34) angeordnet ist, wobei das mehrschichtige Verpackungsmaterial (32) einen Randabschnitt (44) aufweist, in dem die Schicht aus Fasermaterial (34) der umgebenden Atmosphäre ausgesetzt ist, wobei das Verfahren (100) Folgendes umfasst:
Zulassen, dass der erste Flüssigkeitskörper (16) in dem Behälter (14) den Randabschnitt (44) des mehrschichtigen Verpackungsmaterials (32) benetzt, sodass ein Teil des ersten Flüssigkeitskörpers (16) von dem Randabschnitt (44) in die Schicht aus Fasermaterial (34) eindringt.

7. Verfahren (100) nach einem der Ansprüche 4-6, wobei der erste Flüssigkeitskörper (16) und der zweite Flüssigkeitskörper (24) elektrisch leitfähige Flüssigkeiten sind, insbesondere eine NaCl-WasserLösung.

8. Verfahren (100) nach einem der Ansprüche 1 bis 6, das Folgendes umfasst:
Durchführen des Verfahrens (100) für eine Anzahl von Verpackungen (12), die durch dieselbe Verpackungsmaschine zu unterschiedlichen Zeitpunkten hergestellt wurden, um dadurch die elektrische Charakteristik (U) für jede Verpackung (12) der Anzahl von Packungen zu erhalten, sodass eine Sequenz elektrischer Charakteristiken (U) gebildet wird,
Überwachen (118) der Sequenz elektrischer Charakteristiken (U) zum Bestimmen, ob sich die elektrischen Charakteristiken (U) im Laufe der Zeit geändert haben, und Durchführen mindestens eines der folgenden Schritte:
- Initiieren einer Wartungstätigkeit für die Verpackungsmaschine, wenn die Änderung einen vorbestimmten Schwellenwert überschreitet, und
- Korrelieren der Änderung mit einer für die Verpackungsmaschine ergriffenen Maßnahme.

## Revendications

1. Procédé (100) pour détecter un défaut (49) dans un emballage (12) qui est produit à partir de matériaux stratifiés sans couche métallique conductrice et renferme un volume intérieur (22) configuré pour contenir un produit alimentaire liquide, le procédé (100) comprenant le fait de mettre (102) un premier corps de liquide (16) dans un récipient (14),
le fait de mettre (104) un deuxième corps de liquide (24) dans l'emballage (12),
le positionnement (106) de l'emballage (12) dans le récipient (14), de telle sorte que le premier corps de liquide (16) dans le récipient (14) entoure une portion externe (18) de l'emballage (12),
la fourniture (108) d'une connexion électrique au premier corps de liquide (16) dans le récipient (14),
l'insertion (110) d'une électrode (26) dans le deuxième corps de liquide (24) dans l'emballage (12),
l'alimentation (112) de l'électrode (26) avec un courant électrique (29) pour augmenter la tension de l'électrode (26) à au moins 2 kV,
la mesure (114), en référence à l'élément connecteur (20), d'une caractéristique électrique (U) représentant la tension augmentée de l'électrode (26), et
la détermination (116) de la présence du défaut (49) dans l'emballage (12) sur la base de la caractéristique électrique (U).

2. Procédé (100) selon la revendication 1, dans lequel la détermination (116) de la présence du défaut (49) comprend la détermination (1161) de si la caractéristique électrique (U) indique qu'une tension sur l'élément connecteur (20) et l'électrode (26) chute avant qu'une valeur seuil prédéterminée (U₁) ne soit atteinte.

3. Procédé (100) selon la revendication 1 ou la revendication 2, dans lequel l'alimentation (112) en courant électrique (29) comprend l'augmentation (1121) de la tension de l'électrode (26) jusqu'à ce que la caractéristique électrique (U) indique qu'une tension sur l'élément connecteur (20) et l'électrode (26) chute.

4. Procédé (100) selon l'une quelconque des revendications 1 à 3, comprenant
l'insertion (1101), simultanément à l'insertion (110) de l'électrode (26) dans le second corps de liquide (24), d'un second élément connecteur (60) dans le volume intérieur (22) de l'emballage (12), tout en ayant le second connecteur (60) agencé à une élévation plus haute que l'électrode (26), de telle sorte que, si le second corps de liquide (24) contenu dans le volume intérieur (22) de l'emballage (12) remplit le volume intérieur (22) au-dessus d'un niveau prédéterminé (62) à l'intérieur de l'emballage (12), le second élément connecteur (60) se retrouve inséré dans le second corps de liquide (24) dans l'emballage (12) après l'électrode (26),
la mesure d'une seconde caractéristique électrique représentative de la présence d'un courant électrique (29) circulant de l'électrode (26) vers le second élément connecteur (60), et
la génération, si un courant électrique (29) circulant de l'électrode (26) vers le second élément de connecteur (60) est présent, d'un signal indicatif d'une telle présence.

5. Procédé (100) selon l'une quelconque des revendications 1 à 4, comprenant
la découpe (103) de l'emballage (12) de manière à l'ouvrir tout en maintenant intacte une section inférieure (121) de l'emballage (12) avec au moins une portion d'une paroi (122) de l'emballage (12) s'étendant à partir de la section inférieure, de telle sorte qu'une portion inférieure (221) du volume intérieur (22) de l'emballage (12) reste intacte,
dans lequel positionnement (106) de l'emballage (12) dans le récipient (14) comprend le positionnement de la section inférieure (121) de l'emballage (12) dans le récipient (14), de telle sorte que le premier corps de liquide (16) dans le récipient (14) mouille la section inférieure (121) et au moins une portion de la paroi (122) de l'emballage (12) s'étendant à partir de la section inférieure (121).

6. Procédé (100) selon l'une quelconque des revendications 1 à 5, dans lequel l'emballage (12) est formé à partir d'un matériau d'emballage multicouche (32) qui comprend une couche de matériau fibreux (34) et au moins une couche électriquement isolante (36) agencée sur un côté de la couche de matériau fibreux (34), le matériau d'emballage multicouche (32) ayant une section de bord (44) où la couche de matériau fibreux (34) est exposée à l'atmosphère environnante, le procédé (100) comprenant
le fait de permettre au premier corps de liquide (16) dans le récipient (14) de mouiller la section de bord (44) du matériau d'emballage multicouche (32), de telle sorte qu'une portion du premier corps de liquide (16) trempe dans la couche de matériau fibreux (34) à partir de la section de bord (44).

7. Procédé (100) selon l'une quelconque des revendications 4 à 6, dans lequel le premier corps de liquide (16) et le second corps de liquide (24) sont des liquides électriquement conducteurs, en particulier, une solution NaCl-eau.

8. Procédé (100) selon l'une quelconque des revendications 1 à 6, comprenant
la réalisation du procédé (100) pour un nombre d'emballages (12) produits par la même machine à emballer à différents moments dans le temps, pour ainsi obtenir la caractéristique électrique (U) pour chaque emballage (12) du nombre d'emballages, de telle sorte qu'une séquence de caractéristiques électriques (U) est formée, la surveillance (118) de la séquence de caractéristiques électriques (U) pour déterminer si les caractéristiques électriques (U) ont changé au fil du temps, et la réalisation d'au moins une des étapes consistant à
- déclencher une activité de maintenance de la machine à emballer si le changement dépasse un seuil prédéterminé, et
- corréler le changement avec une mesure qui a été prise pour la machine à emballer.
